# EUROPEAN PATENT SPECIFICATION

(11) **EP 2 678 612 B1**
(45) Date of publication and mention of the grant of the patent: **10.01.2018**
(21) Application number: 11716646.2
(22) Date of filing: 25.02.2011
(51) Int. Cl.: F24F 5/00

(54) **AIR CONDITIONING SYSTEM WITH ICE STORAGE**
KLIMAANLAGE MIT EISSPEICHER
SYSTÈME DE CLIMATISATION AVEC STOCKAGE DE GLACE

(43) Date of publication of application: 01.01.2014
(73) Proprietor: Carrier Corporation, Farmington, CT 06034 (US)
(72) Inventor: GRABON, Michel, 01360 Bressolles (FR); DA COSTA, Didier, 69004 Lyon (FR)
(74) Representative: Schmitt-Nilson Schraud Waibel Wohlfrom Patentanwälte Partnerschaft mbB
(86) International application number: PCT/IB2011/000589
(87) International publication number: WO 2012/114143

(56) References cited:
- EP-A2- 0 402 131
- WO-A1-2005/116547
- WO-A1-2006/112638
- JP-A- 2000 171 117

## Description

### BACKGROUND OF THE INVENTION

The subject matter disclosed herein relates to air conditioning systems. More specifically, the subject disclosure relates ice storage systems for air conditioning systems.

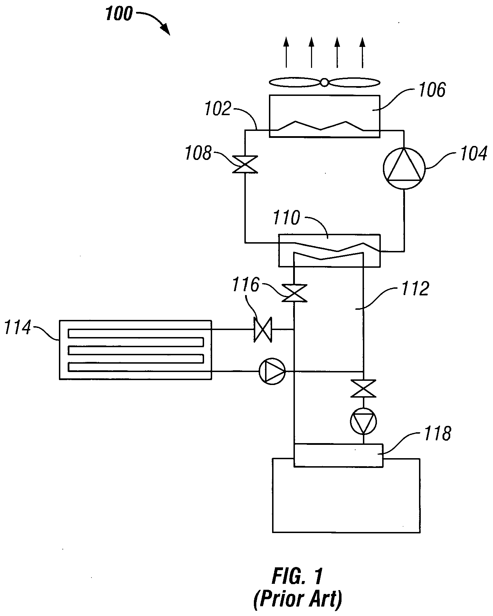

Ice storage is used in air conditioning systems, for example, chiller systems, to take advantage of the large energy content of a volume of frozen water. A traditional ice storage system for an air conditioning system 100 is shown in FIG. 1. In the air conditioning system 100, refrigerant is circulated in a refrigerant loop 102 which flows the refrigerant through a typical refrigerant cycle including a compressor 104, a condenser 106, an expansion valve 108, and an evaporator 110. A brine loop 112 also passes through the evaporator 110 such that the evaporator 110 acts as a brine cooler during operation of the air conditioning system 100. The brine loop 112 passes through an ice storage tank 114, typically with one or more valves 116 to direct the brine flow, a typical brine is an ethylene glycol solution, through the brine loop 112.

Such a system operates in many different modes depending on cooling requirements. In brine cooling mode, also called vapor compression mode, the chiller 100 operates as a conventional chiller. The valves 116 are closed and/or opened so that the brine flow bypasses the ice storage tank 114 and flows through the evaporator 110. In this mode, the evaporator 110 cools the brine flow to about 7 degrees Celsius and the brine is flowed to a chiller 118 to cool a desired space. When the system 100 is operating in ice storage mode, such as when there is not a need to cool the desired space, the air conditioning system 100 flows the brine not to the chiller 118, but to the ice storage tank 114. During this mode, the brine is cooled to -5 degrees to -10 degrees Celsius by the evaporator 110 and freezes water in the ice storage tank 114 thus storing cooling energy in the ice storage tank 114. During operation of the air conditioning system 100 in ice cooling mode, the refrigerant loop 102 is not operating. Brine is circulated through the ice storage tank 114 to cool the brine flow which is then flowed to the chiller 118 to cool the desired space.

Use of the ice storage tank 114 in conjunction with the chiller 118 allows a size of the chiller 118 and allows the air conditioning system 100 to take advantage of lower nighttime electricity costs by using ice storage mode.

Circulation of brine through the ice storage tank 114, however, reduces thermal efficiency of the air conditioning system 100 versus a system utilizing water routed through the chiller 118, since brine has poor heat transfer characteristics when compared to water. Further, inclusion of the brine loop 112 makes the air conditioning system 100 layout complicated due to the valves 116 and other components required to direct the brine flow through the system when operating in the various modes.

WO 2005/116547 A1 shows a method and device to increase the cooling load that can be provided by a refrigerant-based thermal energy storage and cooling system with an improved arrangement of heat exchangers. This load increase is accomplished by circulating cold water surrounding a block of ice, used as the thermal energy storage medium, through a secondary heat exchanger where it condenses refrigerant vapor returning from a load. The refrigerant is then circulated through a primary heat exchanger within the block of ice where it is further cooled and condensed. This system is known as an internal/external melt system because the thermal energy, stored in the form of ice, is melted internally by a primary heat exchanger and externally by circulating cold water from the periphery of the block through a secondary heat exchanger.

From EP 0 402 131 A2 a cooling system with supplemental thermal storage is known. The cooling system comprises a compressor, an evaporative condenser, a thermal storage unit, and an evaporator. During normal outdoor temperatures when building cooling is desired, the compressor output is connected to the evaporative condenser which in turn is connected to the evaporator coil. During periods of time when the building is not occupied, the evaporator coil is removed from the cooling circuit and the working fluid passing through coils in the thermal storage unit acts to freeze liquid surrounding the coils within the thermal storage unit tank. During unusually warm outdoor temperatures, when additional building cooling is required, the compressor output is connected to the evaporative condenser which in turn is connected to the thermal storage unit which output is in turn connected to the evaporative coil. During such operation, additionally chilled working fluid is provided to the evaporator coil due to the working fluid passing through the coils of the thermal storage unit and thereby being further chilled due to the frozen liquid surrounding the coils in the thermal storage unit. An air conditioning system according to the preamble of claim 1 is known from WO 2005/116547 A1.

### BRIEF DESCRIPTION OF THE INVENTION

One aspect of the invention includes an air conditioning system according to claim 1.

According to yet another aspect of the invention, a method of operating an air conditioning system includes conveying a refrigerant flow through a refrigerant conduit to an ice storage tank, the ice storage tank containing a volume of frozen water therein. Thermal energy is transferred from the refrigerant flow to the volume of frozen water, thereby cooling the refrigerant flow. The refrigerant flow is urged from the ice storage tank to an evaporator and a water flow is conveyed to the evaporator via a water pathway. Thermal energy is transferred from the water flow to the refrigerant flow via the evaporator, thereby cooling the water flow. The water flow is conveyed to a chiller to cool a desired space via the chiller.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a typical air conditioning system including ice storage;
FIG. 2 is a schematic of an embodiment of an improved air conditioning system;
FIG. 3 is a schematic of an embodiment of an air conditioning system operating in vapor compression mode;
FIG. 4 is a schematic of an embodiment of an air conditioning system operating in ice storage mode;
FIG. 5 is a schematic of an embodiment of an air conditioning system operating in ice cooling mode; and
FIG. 6 is a schematic of an embodiment of an air conditioning system operating an alternative cooling mode;

The detailed description explains embodiments of the invention, together with advantages and features, by way of example with reference to the drawings.

### DETAILED DESCRIPTION OF THE INVENTION

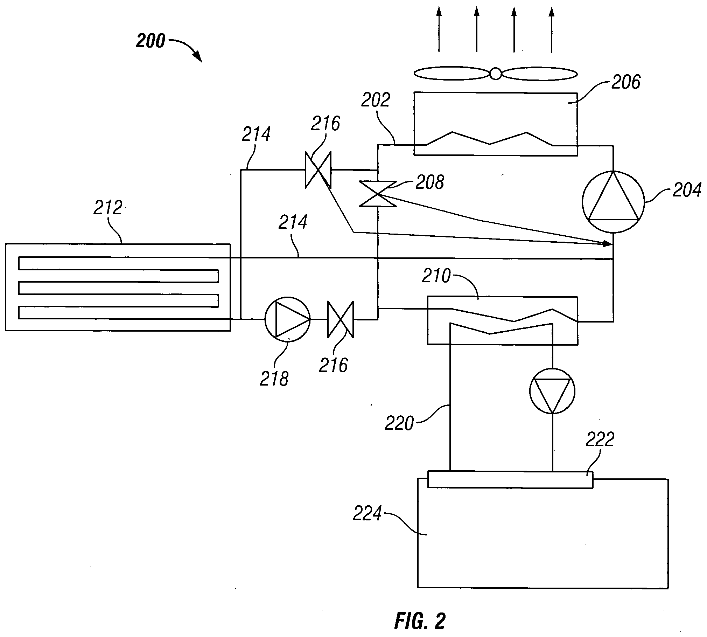

Shown in FIG. 2 is an improved air conditioning system 200. In the air conditioning system 200, refrigerant is circulated in a refrigerant pathway 202 which flows the refrigerant through a typical refrigerant cycle including a compressor 204, a condenser 206, an expansion valve 208, and an evaporator 210. A direct-expansion ice storage tank 212 is connected to the refrigerant conduit 202 via an ice tank pathway 214. The ice tank pathway 214 is connected to the refrigerant conduit 202 by one or more control valves 216. A refrigerant pump 218 may be located along the ice tank conduit 214. The evaporator 210 cools a flow of water which is circulated through a water pathway 220 through the evaporator 210 and to a chiller 222 which cools a desired space 224 via the flow of water. While the ice storage tank 212 is shown in FIG. 2 to be located outside of the chiller 222, in some embodiments the ice storage tank 212 may be disposed internal to the chiller 222. As will be explained in more detail below, the air conditioning system 200 eliminates the brine loop of the prior art resulting in a more efficient and less complex operation of the air conditioning system 200 versus that of the prior art.

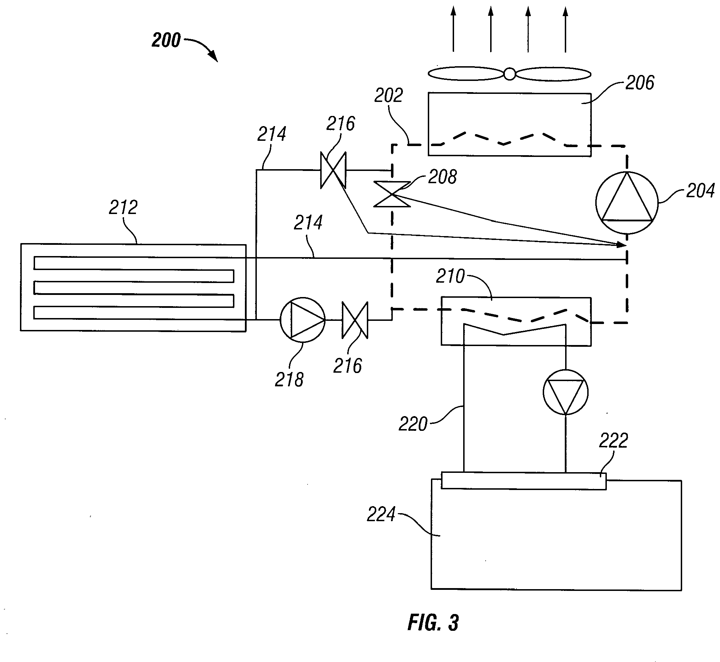

The air conditioning system 200 operates in a variety of modes depending on cooling requirements of the space 224. Shown in FIG. 3 is operation of the air conditioning system 200 in vapor compression, or water cooling mode. In this mode, the refrigerant flow (as shown by the dashed lines in FIG. 3) is circulated through the refrigerant pathway 202 as in a traditional air conditioning system. In this mode, the refrigerant flow passing through the evaporator 210 absorbs thermal energy from the water flow passing through the evaporator 210.

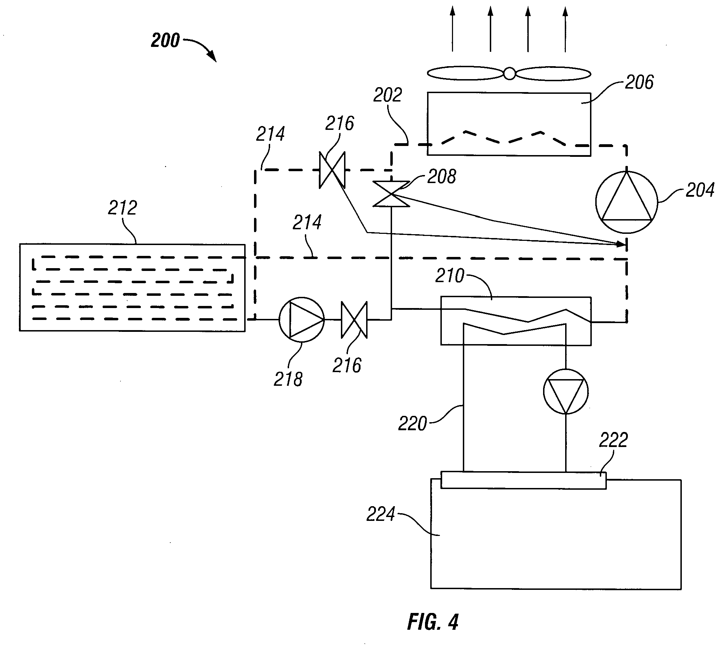

Illustrated in FIG. 4 is operation of the air conditioning system 200 in ice storage mode. At times where it is advantageous to do so, such as off-peak hours where electricity cost is reduced and/or cooling needs are lower, the system can be operated in ice storage mode to freeze water, or other phase change material, in the ice storage tank 212 thus "storing" an amount of cooling energy in the ice storage tank 212 for use at a later time. In ice storage mode, a control valve 216 is opened between the refrigerant pathway 202 and the ice tank pathway 214 and the expansion valve 208 is closed. This diverts the refrigerant flow from the condenser 206 through the control valve 216 and through the ice storage tank 212 via the ice tank pathway 214. As the refrigerant flow (shown again by the dashed lines in FIG. 4) passes through the ice storage tank 212 at about -3 to -7 degrees Celsius, the water in the ice storage tank 212 is frozen. The refrigerant flow leaving the ice storage tank 212 is returned to the compressor 204. In some embodiments, the refrigerant flow bypasses the evaporator 210 when the system 200 is operating in ice storage mode.

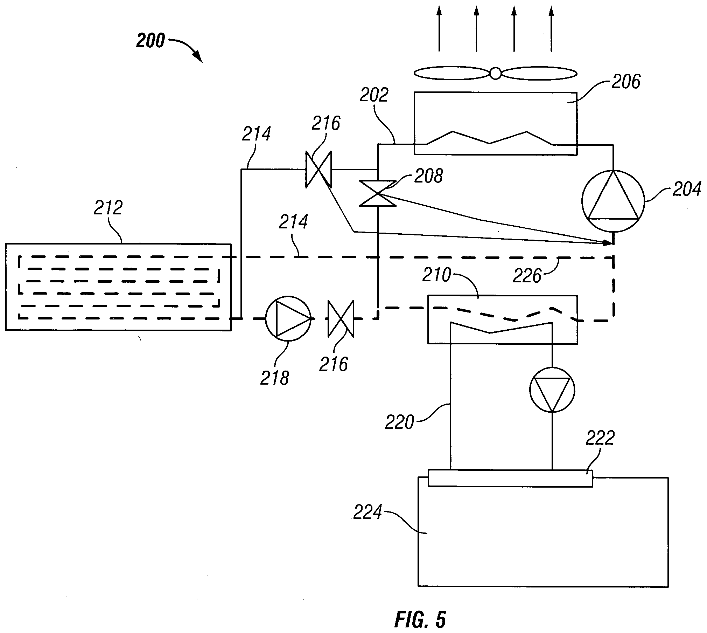

The stored cooling energy in the ice storage tank 212 is utilized when the system 200 is operated in ice cooling mode illustrated in FIG. 5. In this mode, the compressor 204, condenser 206 an expansion valve 208 are all turned "off'. As such, the refrigerant (shown by dashed lines in FIG. 5) is circulated between the evaporator and the ice storage tank 212. The refrigerant flow naturally seeks the lowest temperature portion of the system 200, which in this mode is the ice storage tank 212, so it is not necessary to pump the refrigerant to the ice storage tank 212. The refrigerant flows through the ice storage tank 212 where it is cooled, changing the phase from gas to liquid and pumped in liquid phase from the ice storage tank 212 via the refrigerant pump 218. The cooled refrigerant then flows through the evaporator 210 where thermal energy from the water flowing through the water pathway 220 is absorbed by the refrigerant flow thereby cooling the water flow. The water flow is then circulated to the chiller 222 via the water pathway 220. The refrigerant is evaporated while absorbing a heat from water and in gas phase flow from the evaporator 210 bypasses the compressor 204, condenser 206 and expansion valve 208 via a bypass pathway 226 and returns to the ice storage tank 212.

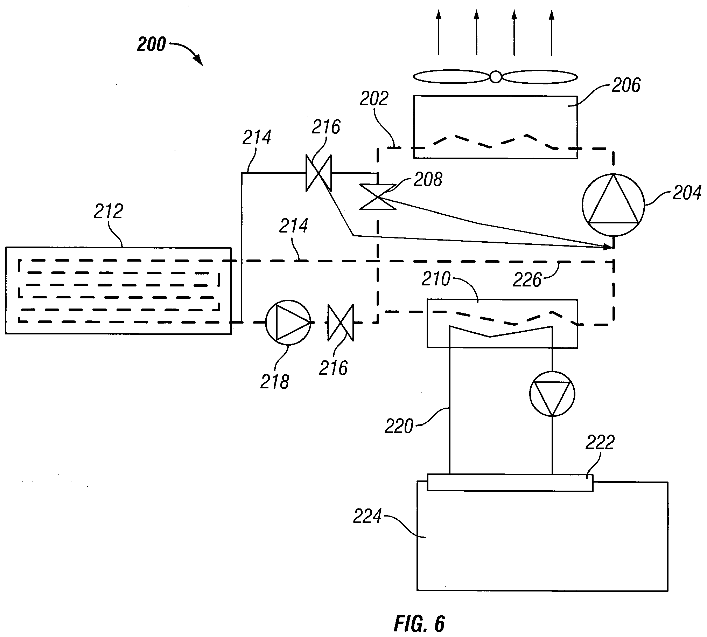

The system 200 can also be operated in a dual water cooling and ice cooling mode. In this mode, as shown in FIG. 6, the compressor 204, condenser 206 and expansion valve 208 are turned "on", but the valve 216 is closed. Refrigerant (shown as the dashed lines in FIG. 6) circulates through both the refrigerant pathway 202 and the ice tank pathway 214, with a portion of the refrigerant bypassing the compressor 204 and flowing to the ice storage tank 212 via the bypass pathway 226. The refrigerant portion flowing through the ice storage tank 212 is cooled by the ice stored therein while the refrigerant portion flowing into the compressor 204 is cooled via the compressor 204, condenser 206 and expansion valve 208.

## Claims

1. An air conditioning system (200) comprising:
a condenser (206);
an evaporator (210) configured to remove thermal energy from a water flow through the evaporator (210) via a refrigerant flow through the evaporator (210);
a refrigerant conduit (202) configured to convey a refrigerant flow through the evaporator (210) and the condenser (206);
an ice storage tank (212) fluidly connected to the refrigerant conduit (202) such that the refrigerant flow is flowable through the ice storage tank (212) to transfer thermal energy between the refrigerant flow and a volume of frozen water disposed in the ice storage tank (212);
a chiller (222); and **characterised by** a water pathway (220) for circulating a flow of water through the evaporator (210) and to the chiller (222) for cooling a desired space (224) via the flow of water;
wherein the evaporator (210) is configured such that thermal energy from the water flow flowing through the water pathway (220) is absorbed by the refrigerant flow through the evaporator (210), thereby cooling the water flow.

2. The air conditioning system (200) of claim 1, further comprising
an ice tank pathway line (214) connecting the ice storage tank (212) to the refrigerant conduit line (202) connecting an expansion valve (208) to the evaporator (210), and a pump (218) and a control valve (216) being arranged in said line; and
a bypass pathway (226) from the refrigerant conduit line (202) connecting the evaporator (210) to the compressor (204), to the ice storage tank (212), for circulating the refrigerant between the evaporator (210) and the ice storage tank (212) bypassing the compressor (204), the condenser (206) and the expansion valve (208), with the compressor (204), the condenser (206) and the expansion valve (208) being turned off.

3. The air conditioning system (200) of Claim 1, wherein the ice storage tank (212) is disposed external to a chiller (222) of the air conditioning system (200).

4. The air conditioning system (200) of Claim 2, wherein the pump (218) is configured to urge the refrigerant flow from the ice storage tank (212) to the evaporator (210).

5. The air conditioning system (200) of Claim 1, further comprising an ice tank conduit (214) extending through the ice storage tank (212) configured to convey the refrigerant flow through the ice storage tank (212).

6. The air conditioning system (200) of Claim 5, wherein the ice tank conduit (214) is connected to the refrigerant conduit (202) via one or more valves (216).

7. The air conditioning system (200) of Claim 6, wherein opening the one or more valves (216) allows the refrigerant flow to flow through the ice storage tank (212).

8. The air conditioning system of Claim 1, wherein the water flow is urged from the evaporator (210) to the chiller (222) to cool the desired space (224).

9. A method of operating an air conditioning system comprises:
conveying a refrigerant flow through a refrigerant conduit (202) to an ice storage tank (212), the ice storage tank (212) containing a volume of frozen phase change material therein;
transferring thermal energy from the refrigerant flow to the volume of frozen phase change material, thereby cooling the refrigerant flow;
urging the refrigerant flow from the ice storage tank (212) to an evaporator (210);
conveying a water flow to the evaporator via a water pathway (220);
transferring thermal energy from the water flow to the refrigerant flow via the evaporator (210), thereby cooling the water flow; and
conveying the water flow to a chiller (222) to cool a desired space (224) via the chiller (222).

10. The method of claim 9, further comprising a refrigerant cycle including a compressor (204), a condenser (206), an expansion valve (208) and an evaporator (210), the method further comprising the steps of turning off the compressor (204), the condenser (206) and the expansion valve (208); circulating the refrigerant between the evaporator (210) and the ice storage tank (212) bypassing the compressor (204), the condenser (206) and the expansion valve (208), through an ice tank pathway line (214) connecting the ice storage tank (212) via a pump (218) and a control valve (216) to the refrigerant conduit line (202) connecting the expansion valve (208) to the evaporator (210), and through a bypass pathway (226) from the refrigerant conduit line (202) connecting the evaporator (210) to the compressor (204) to the ice storage tank (212).

11. The method of Claim 9, wherein a temperature of the ice storage tank (212) is lower than a refrigerant temperature, thus the refrigerant flow is conveyed to the ice storage tank (212) via thermal forces.

12. The method of Claim 9, wherein the refrigerant flow is urged from the ice storage tank (212) to the evaporator (210) via the pump (218).

13. The method of Claim 9, wherein a refrigerant flow temperature is about -3.0 to -7.0 degrees Celsius below a freezing point of the phase change material.

## Patentansprüche

1. Klimaanlage (200), umfassend:
einen Kondensator (206);
einen Verdampfer (210), konfiguriert, um Wärmeenergie aus einem Wasserfluss durch den Verdampfer (210) über einen Kältemittelfluss durch den Verdampfer (210) zu entfernen;
eine Kältemittelleitung (202), konfiguriert, um einen Kältemittelfluss durch den Verdampfer (210) und den Kondensator (206) zu transportieren;
einen Eisspeichertank (212), fluidverbunden mit der Kältemittelleitung (202), sodass der Kältemittelfluss durch den Eisspeichertank (212) fließen kann, um Wärmenergie zwischen dem Kältemittelfluss und einer Menge an gefrorenem Wasser, die/das sich in dem Eisspeichertank (212) befindet, zu transportieren;
einen Kühler (222); und
**gekennzeichnet durch**
einen Wasserpfad (220) zum Zirkulieren eines Wasserflusses durch den Verdampfer (210) und zu dem Kühler (222) zum Kühlen eines gewünschten Raums (224) durch den Wasserfluss;
wobei der Verdampfer (210) so konfiguriert ist, dass die Wärmeenergie aus dem Wasserfluss, der durch den Wasserpfad (220) fließt, von dem Kältemittelfluss durch den Verdampfer (210) absorbiert wird, wodurch der Wasserfluss gekühlt wird.

2. Klimaanlage (200) nach Anspruch 1, ferner umfassend
eine Eistankpfadleitung (214), die den Eisspeichertank (212) mit der Kältemittelleitung (202) verbindet, die ein Expansionsventil (208) mit dem Verdampfer (210) verbindet, und wobei eine Pumpe (218) und ein Steuerventil (216) in der Leitung angeordnet sind; und
einen Bypasspfad (226) von der Kältemittelleitung (202), die den Verdampfer (210) mit dem Verdichter (204) verbindet, zu dem Eisspeichertank (212) zum Zirkulieren des Kältemittels zwischen dem Verdampfer (210) und dem Eisspeichertank (212), die den Verdichter (204), den Kondensator (206) und das Expansionsventil (208) umgeht, wobei der Verdichter (204), der Kondensator (206) und das Expansionsventil (208) ausgeschaltet sind.

3. Klimaanlage (200) nach Anspruch 1, wobei der Eisspeichertank (212) außerhalb von einem Kühler (222) der Klimaanlage (200) angeordnet ist.

4. Klimaanlage (200) nach Anspruch 2, wobei die Pumpe (218) konfiguriert ist, um den Kältemittelfluss von dem Eisspeichertank (212) zu dem Verdampfer (210) zu drängen.

5. Klimaanlage (200) nach Anspruch 1, ferner umfassend eine Eistankleitung (214), die durch den Eisspeichertank (212) führt, die konfiguriert ist, um den Kältemittelfluss durch den Eisspeichertank (212) zu leiten.

6. Klimaanlage (200) nach Anspruch 5, wobei die Eistankleitung (214) mit der Kältemittelleitung (202) durch ein oder mehrere Ventile (216) verbunden ist.

7. Klimaanlage (200) nach Anspruch 6, wobei es das Öffnen des einen oder der mehreren Ventile (216) erlaubt, dass der Kältemittelfluss durch den Eisspeichertank (212) strömt.

8. Klimaanlage nach Anspruch 1, wobei der Wasserfluss von dem Verdampfer (210) zu dem Kühler (222) gedrängt wird, um den gewünschten Raum (224) zu kühlen.

9. Verfahren zum Betreiben einer Klimaanlage, umfassend:
Leiten eines Kältemittelflusses durch eine Kältemittelleitung (202) zu einem Eisspeichertank (212), wobei der Eisspeichertank (212) darin eine Menge an gefrorenem Phasenänderungsmaterial enthält;
Übertragen von Wärmeenergie von dem Kältemittelfluss zu der Menge an Phasenänderungsmaterial, wodurch der Kältemittelfluss gekühlt wird;
Drängen des Kältemittelflusses von dem Eisspeichertank (212) zu einem Verdampfer (210);
Leiten eines Wasserstroms zu einem Verdampfer über einen Wasserpfad (220);
Übertragen von Wärmeenergie von dem Wasserfluss zu dem Kältemittelfluss über den Verdampfer (210), wodurch der Wasserfluss gekühlt wird; und
Leiten des Wasserflusses zu einem Kühler (222), um einen gewünschten Raum (224) durch den Kühler (222) zu kühlen.

10. Verfahren nach Anspruch 9, ferner umfassend einen Kältemittelkreislauf, einschließlich eines Verdichters (204), eines Kondensators (206), eines Expansionsventils (208) und eines Verdampfers (210), wobei das Verfahren ferner folgende Schritte umfasst: Ausschalten des Verdichters (204), des Kondensators (206) und des Expansionsventils (208); Zirkulieren des Kältemittels zwischen dem Verdampfer (210) und dem Eisspeichertank (212), wobei es den Verdichter (204), den Kondensator (206) und das Expansionsventil (208) umgeht, durch eine Eistankpfadleitung (214), die den Eisspeichertank (212) über eine Pumpe (218) und ein Steuerventil (216) mit der Kältemittelleitung (202) verbindet, die das Expansionsventil (208) mit dem Verdampfer (210) verbindet, und durch einen Bypasspfad (226) von der Kältemittelleitung (202), die den Verdampfer (210) mit dem Verdichter (204) verbindet, zu dem Eisspeichertank (212).

11. Verfahren nach Anspruch 9, wobei eine Temperatur des Eisspeichertanks (212) niedriger als eine Kältemitteltemperatur ist, wodurch der Kältemittelfluss durch thermische Kräfte zu dem Eisspeichertank (212) geleitet wird.

12. Verfahren nach Anspruch 9, wobei der Kältemittelfluss durch die Pumpe (218) aus dem Eisspeichertank (212) zu dem Verdampfer (210) gedrängt wird.

13. Verfahren nach Anspruch 9, wobei die Kältemittelfluss-Temperatur etwa -3,0 bis -7,0 Grad Celsius unter einem Gefrierpunkt des Phasenänderungsmaterials liegt.

## Revendications

1. Système de climatisation (200) comprenant :
un condenseur (206) ;
un évaporateur (210) configuré pour retirer l'énergie thermique d'un écoulement d'eau à travers l'évaporateur (210) par l'intermédiaire d'un écoulement de réfrigérant à travers l'évaporateur (210) ;
une conduite de réfrigérant (202) configurée pour transporter un écoulement de réfrigérant à travers l'évaporateur (210) et le condenseur (206) ;
un réservoir de stockage de glace (212) relié fluidiquement à la conduite de réfrigérant (202) de sorte que l'écoulement de réfrigérant peut s'écouler à travers le réservoir de stockage de glace (212) pour transférer l'énergie thermique entre l'écoulement de réfrigérant et un volume d'eau gelée disposée dans le réservoir de stockage de glace (212) ;
un refroidisseur (222) ; et
**caractérisé par** un passage d'eau (220) pour faire circuler un écoulement d'eau à travers l'évaporateur (210) et vers le refroidisseur (222) pour refroidir un espace souhaité (224) par l'intermédiaire de l'écoulement d'eau ;
dans lequel l'évaporateur (210) est configuré de sorte que l'énergie thermique provenant de l'écoulement d'eau s'écoulant à travers le passage d'eau (220) est absorbée par l'écoulement de réfrigérant à travers l'évaporateur (210), refroidissant ainsi l'écoulement d'eau.

2. Système de climatisation (200) selon la revendication 1, comprenant en outre
une ligne de passage de réservoir de glace (214) reliant le réservoir de stockage de glace (212) à la ligne de conduite de réfrigérant (202) reliant une vanne de détente (208) à l'évaporateur (210), et une pompe (218) et une vanne de commande (216) étant agencées dans ladite ligne ; et
un passage de contournement (226) à partir de la ligne de conduite de réfrigérant (202) reliant l'évaporateur (210) au compresseur (204), au réservoir de stockage de glace (212), pour faire circuler le réfrigérant entre l'évaporateur (210) et le réservoir de stockage de glace (212) en contournant le compresseur (204), le condenseur (206) et la vanne de détente (208), le compresseur (204), le condenseur (206) et la vanne de détente (208) étant désactivés.

3. Système de climatisation (200) selon la revendication 1, dans lequel le réservoir de stockage de glace (212) est disposé à l'extérieur d'un refroidisseur (222) du système de climatisation (200).

4. Système de climatisation (200) selon la revendication 2, dans lequel la pompe (218) est configurée pour pousser l'écoulement de réfrigérant depuis le réservoir de stockage de glace (212) vers l'évaporateur (210).

5. Système de climatisation (200) selon la revendication 1, comprenant en outre une conduite de réservoir de glace (214) s'étendant à travers le réservoir de stockage de glace (212) configuré pour : transporter l'écoulement de réfrigérant à travers le réservoir de stockage de glace (212).

6. Système de climatisation (200) selon la revendication 5, dans lequel la conduite de réservoir de glace (214) est reliée à la conduite de réfrigérant (202) par l'intermédiaire d'une ou de plusieurs vannes (216).

7. Système de climatisation (200) selon la revendication 6, dans lequel l'ouverture des une ou plusieurs vannes (216) permet à l'écoulement de réfrigérant de s'écouler à travers le réservoir de stockage de glace (212).

8. Système de climatisation selon la revendication 1, dans lequel l'écoulement d'eau est poussé depuis l'évaporateur (210) vers le refroidisseur (222) pour refroidir l'espace souhaité (224).

9. Procédé de fonctionnement d'un système de climatisation comprenant :
le transport d'un écoulement de réfrigérant à travers une conduite de réfrigérant (202) vers un réservoir de stockage de glace (212), le réservoir de stockage de glace (212) contenant un volume de matériau à changement de phase gelé à l'intérieur de celui-ci ;
le transfert d'énergie thermique de l'écoulement de réfrigérant vers le volume de matériau à changement de phase gelé, refroidissant ainsi l'écoulement de réfrigérant ;
la poussée de l'écoulement de réfrigérant du réservoir de stockage de glace (212) vers un évaporateur (210) ;
le transport d'un écoulement d'eau vers l'évaporateur par l'intermédiaire d'un passage d'eau (220) ;
le transfert d'énergie thermique de l'écoulement d'eau vers l'écoulement de réfrigérant par l'intermédiaire de l'évaporateur (210), refroidissant ainsi l'écoulement d'eau ; et
le transport de l'écoulement d'eau vers un refroidisseur (222) pour refroidir un espace souhaité (224) par l'intermédiaire du refroidisseur (222).

10. Procédé selon la revendication 9, comprenant en outre un cycle de réfrigérant comprenant un compresseur (204), un condenseur (206), une vanne de détente (208) et un évaporateur (210), le procédé comprenant en outre les étapes consistant à désactiver le compresseur (204), le condenseur (206) et la vanne de détente (208) ; la circulation du réfrigérant entre l'évaporateur (210) et le réservoir de stockage de glace (212) en contournant le compresseur (204), le condenseur (206) et la vanne de détente (208), à travers une ligne de passage de réservoir de glace (214) reliant le réservoir de stockage de glace (212) par l'intermédiaire d'une pompe (218) et d'une vanne de commande (216) à la ligne de conduite de réfrigérant (202) reliant la vanne de détente (208) à l'évaporateur (210), et à travers un passage de contournement (226) à partir de la ligne de conduite de réfrigérant (202) reliant l'évaporateur (210) au compresseur (204) au réservoir de stockage de glace (212).

11. Procédé selon la revendication 9, dans lequel une température du réservoir de stockage de glace (212) est inférieure à une température de réfrigérant, l'écoulement de réfrigérant est ainsi transporté vers le réservoir de stockage de glace (212) par l'intermédiaire de forces thermiques.

12. Procédé selon la revendication 9, dans lequel l'écoulement de réfrigérant est poussé depuis le réservoir de stockage de glace (212) vers l'évaporateur (210) par l'intermédiaire de la pompe (218).

13. Procédé selon la revendication 9, dans lequel une température d'écoulement de réfrigérant est d'environ -3,0 à - 7,0 degrés Celsius en dessous d'un point de congélation du matériau à changement de phase.
